Europäisches Patentamt

European Patent Office

Office européen des brevets

(19)

(11) **EP 0 663 969 B1**

(12) **EUROPÄISCHE PATENTSCHRIFT**

(45) Veröffentlichungstag und Bekanntmachung des Hinweises auf die Patenterteilung:
**07.05.1997 Patentblatt 1997/19**

(51) Int Cl.⁶: **D06M 15/263**, D06M 15/285, D06M 15/03, C08F 251/00, C11D 3/37

(21) Anmeldenummer: **93921855.8**

(22) Anmeldetag: **25.09.1993**

(86) Internationale Anmeldenummer:
**PCT/EP93/02614**

(87) Internationale Veröffentlichungsnummer:
**WO 94/08085 (14.04.1994 Gazette 1994/09)**

(54) **VERWENDUNG VON WÄSSRIGEN POLYMERISATDISPERSIONEN ZUR PFLEGELEICHTEN AUSRÜSTUNG VON TEXTILIEN**

USE OF AQUEOUS POLYMER DISPERSIONS FOR EASY-CARE FINISHING OF TEXTILES

UTILISATION DES DISPERSIONS POLYMERES AQUEUSES POUR L'APPRET FACILE A ENTRETENIR DE TEXTILES

(84) Benannte Vertragsstaaten:
**AT BE CH DE DK ES FR GB IT LI NL PT SE**

(30) Priorität: **06.10.1992 DE 4233497**

(43) Veröffentlichungstag der Anmeldung:
**26.07.1995 Patentblatt 1995/30**

(73) Patentinhaber: **BASF Aktiengesellschaft 67063 Ludwigshafen (DE)**

(72) Erfinder:
• **WUESTEFELD, Renate**
  **D-67105 Schifferstadt (DE)**
• **SIMENC, Toni**
  **D-68199 Mannheim (DE)**

(56) Entgegenhaltungen:
**EP-A- 0 134 449      EP-A- 0 408 099
EP-A- 0 441 197      EP-A- 0 526 800
CH-D- 225 960        FR-A- 2 372 267
GB-A- 1 076 414      GB-A- 2 075 525**

## Beschreibung

Die vorliegende Erfindung betrifft die Verwendung von wäßrigen Polymerisatdispersionen, die dadurch erhältlich sind, daß man radikalisch polymerisierbare ungesättigte Monomere in wäßriger Phase in Anwesenheit eines Saccharids oder Mischungen von Sacchariden nach dem Verfahren der radikalischen wäßrigen Emulsionspolymerisation polymerisiert, als Textilhilfsmittel zur pflegeleichten Ausrüstung von Textilien. Weiterhin betrifft die Erfindung ein Verfahren zur pflegeleichten Ausrüstung von Textilien.

Wäßrige Dispersionen filmbildender Polymerisate sind als Hilfsmittel bei der pflegeleichten Hochveredlung von Textilien bekannt. Sie enthalten neben den für die Filmbildungseigenschaften verantwortlichen Einheiten, meistens auf Acrylatbasis, zusätzlich "reaktive" Gruppen tragende Monomereneinheiten einpolymerisiert, die mit reaktiven Hochveredlungsmitteln (Vernetzern) in Gegenwart von Katalysatoren reagieren können. Als reaktive Monomereinheiten werden meistens N-Methylolverbindungen von Acryl- und Methacrylsäureamid, Ester von ungesättigten organischen Säuren wie Acrylsäure oder Methacrylsäure verwendet.

So werden beispielsweise in der DE-AS-12 09 989 (1) Dispersionen von Mischpolymerisaten aus einem N-Methylolamid einer Acrylsäure, einer Komponente mit mindestens zwei polymerisierbaren Doppelbindungen im Molekül und weiteren polymerisierbaren Verbindungen als Textilhilfsmittel beschrieben.

Aus der DE-AS-11 10 606 (2) ist ebenfalls bekannt, daß man ein Mischpolymerisat aus einem N-Methylolamid einer Acrylsäure und anderen polymerisierbaren Verbindungen zum Veredeln von Cellulosegeweben verwenden kann.

Diese handelsüblichen filmbildenden Polymerisate werden als Hilfsmittel (Additiv) wäßrigen Ausrüstungsflotten zugesetzt, um die gewünschten pflegeleichten Eigenschaften der ausgerüsteten Textilgewebe zu erzielen. Die Palette der hierbei verbesserten Eigenschaften ist vielfältig.

Die EP-A-345 566 (3) betrifft formaldehydfreie Vernetzungsmittel auf Basis eines Copolymers aus hydroxylgruppenfreien Monomeren und hydroxylgruppenhaltigen Komponenten wie Polyvinylalkohol, Stärke, Stärkederivaten oder kolloidaler Cellulose. Mit diesen Vernetzungsmitteln werden nicht gewebte Faserstrukturen unter Einbau von mindestens 10 Gew.-% dieses Mittels hergestellt.

Aus der FR-A-2 372 267 ist die Verwendung von wäßrigen Polymerisatdispersionen, die durch radikalische Emulsionspolymerisation ungesättigter Monomere in wäßriger Phase in Anwesenheit von Sacchariden erhältlich sind, als Textilhilfsmittel zur fortwährenden pflegeleichten Behandlung von Textilien im häuslichen Bereich bekannt.

Der Nachteil der bekannten Polymerisatdispersionen, wie sie z.B. in (1) oder (2) beschrieben werden, ist jedoch ihre sehr schlechte Scherstabilität auf den Abquetsch-(Foulard)-Walzen. Unter den starken Scherkräften auf den Foulardwalzen, vor allem bei höheren Produktionsgeschwindigkeiten und dichtem Textilmaterial, brechen die Dispersionen zusammen, was zu Ausscheidungen des filmbildenden Polymerisates aus der Dispersion führt. Es bildet sich ein Walzenbelag, der schwer entfernbare Flecken auf der Textilware verursachen kann.

Außerdem sind die bekannten filmbildenden Polymerisatdispersionen, die in der pflegeleichten Ausrüstung verwendet werden, anionaktiv, was ihre Mitverwendung mit anderen Hilfsmitteln im Imprägnierbad stark beschränkt. Sie sind mit allen kationaktiven Hilfsmitteln nicht verträglich.

Aufgabe der vorliegenden Erfindung war es daher, Polymerisatdispersionen für den genannten Einsatzzweck bereitzustellen, welche die Nachteile der Mittel des Standes der Technik nicht mehr aufweisen.

Demgemäß wurde die eingangs definierte Verwendung von wäßrigen Polymerisatdispersionen gefunden.

Unter Sacchariden sind Monosaccharide, Oligosaccharide, Polysaccharide, oxidativ, hydrolytisch und/oder enzymatisch abgebaute Polysaccharide oder chemisch modifizierte Mono-, Oligo- oder Polysaccharide zu verstehen.

Als radikalisch polymerisierbare Monomere kommen unter anderen insbesondere monoethylenisch ungesättigte Monomere wie Olefine, z.B. Ethylen, vinylaromatische Monomere wie Styrol, $\alpha$-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisen $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -iso-butyl und -2-ethylhexylester, Maleinsäuredimethylester oder Maleinsäuren-butylester, Nitrile $\alpha,\beta$-monoethylenisch ungesättigter Carbonsäuren wie Acrylnitril sowie $C_{4-8}$ konjugierte Diene wie 1,3-Butadien und Isopren in Betracht. Werden Nitrile mitverwendet, sollte deren Anteil an der Gesamtmenge der eingesetzten Monomeren kleiner als 20 Gew.-%, insbesondere kleiner als 10 Gew.-% sein. Die genannten Monomeren sind im wesentlichen in wäßrigem Medium nicht löslich und bilden in der Regel die Hauptmonomeren, die, bezogen auf die Gesamtmenge der zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende $\alpha,\beta$-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze, Vinylphosphonsäure, deren wasserlösliche Salze und Ester sowie N-Vinylpyrrolidon, 2-Hydroxyethylacrylat, 3-Hydroxypropylacrylat und Dimethylaminoethylacrylat. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonylgruppe oder wenigstens zwei nicht konjugierte ethylenisch ungesättigte Doppelbindungen auf. Beispiele hierfür sind N-Alkylolamide von 3 bis 10 C-Atome aufweisenden $\alpha,\beta$-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind. Weiterhin sind N-Methylol- und N-Methylolether-Verbindungen von Harnstoff, Melamin, Glyoxalmonourein und Acetylendiharnstcff bevorzugt. Außerdem eignen sich Umsetzungsprodukte aus Glyoxal und Dialkylharnstoffen, insbesondere Dimethylharnstoff. Weitere Beispiele für vernetzend wirkende Monomere sind zwei Vinylreste aufweisende Monomere, zwei Vinylidenreste aufweisende Monomere sowie zwei Alkylenreste aufweisende Monomere. Besonders geeignet sind dabei die Di-Ester zweiwertiger Alkohole mit $\alpha,\beta$-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat oder Methylenbisacrylamid. Neben ungesättigte Doppelbindungen aufweisenden Monomeren können in untergeordneten Mengen, üblicherweise 0,01 bis 4 Gew.-% bezogen auf die zu polymerisierenden Monomeren, das Molekulargewicht regelnde Substanzen wie tert.-Dodecylmercaptan miteinpolymerisiert werden. Vorzugsweise werden derartige Substanzen im Gemisch mit den zu polymerisierenden Monomeren der Polymerisationszone zugegeben.

Bevorzugte Klassen von erfindungsgemäß einzusetzenden wäßrigen Polymerisatdispersionen sind solche, deren Polymerisate durch radikalische Polymerisation von Monomerengemischen erhältlich sind, die

- zu 50 bis 100 Gew.-% aus Estern der Acryl- und/oder Methacrylsäure mit 1 bis 12, insbesondere 1 bis 4 C-Atome aufweisenden Alkanolen (Klasse I)

oder

- zu 70 bis 100 Gew.-% aus Styrol und/oder Vinylacetat und/oder Vinylpropionat (Klasse II)

zusammengesetzt sind, wobei die Klasse I besonders bevorzugt ist und vorzugsweise nachfolgende Monomerenzusammensetzungen umfaßt:

| 90 bis 99 Gew.-% | aus Estern der Acryl- und/oder Methacrylsäure mit 1 bis 8 C-Atome aufweisenden Alkanolen und |
|---|---|
| 1 bis 10 Gew.-% | Acrylsäure, Methacrylsäure oder deren Gemisch. |

Von ganz besonderem Interesse sind die nachfolgenden Monomerenzusammensetzungen:

| 90 bis 99 Gew.-% | n-Butylacrylat |
|---|---|
| 1 bis 10 Gew.-% | Acrylsäure und/oder Methacrylsäure. |

Die Polymerisation der genannten Monomeren erfolgt erfindungsgemäß nach dem Verfahren der radikalischen wäßrigen Emulsionspolymerisation in Anwesenheit von Polysacchariden, Oligosacchariden, Monosacchariden und/oder deren Derivaten. Sie können pflanzlichen oder tierischen Ursprungs, in Wasser löslich oder nur darin dispergierbar sein. Bevorzugt werden Oligo- oder Polysaccharide, oxidativ, hydrolytisch und/oder enzymatisch abgebaute Polysaccharide, chemisch modifizierte Mono-, Oligo- oder Polysaccharide oder Mischungen der genannten Verbindungen mit einem Molekulargewicht bis 25.000, wobei es sich hier um ein gewichtsmittleres Molekulargewicht $M_w$ handelt.

Besonders geeignet sind unter anderem die sogenannten Quellstärken, die beispielsweise durch hydrothermische Behandlung von nativer Stärke erhältlich sind. Ferner eignen sich dünnkochende Stärken. Es handelt es dabei um mit Säuren oder Enzymen geringfügig abgebaute oder mit milden Oxidationsmitteln oxidierte Stärken, die auch in höheren Konzentrationen beim Kochen mit Wasser keine viskosen Kleister sondern relativ dünne Flüssigkeiten ergeben. Außerdem sind säuremodifizierte Stärken geeignet, die durch Erwärmen einer wäßrigen Stärkesuspension unterhalb der Verkleisterungstemperatur in Gegenwart geringer Säuremengen gewonnen werden. Weiterhin kommen oxidativ modifizierte Stärken in Betracht. Als Oxidationsmittel können z.B. Chromsäure, Permanganat, Wasserstoffperoxid, Stickstoffdioxid, Hypochlorit oder Perjodsäure herangezogen werden. Als Ausgangsstärken sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet. Besonders vorteilhaft ist die Verwendung von Röstdextrinen, wie sie z.B. in der EP-A-408 099 sowie in der EP-A-334 515 beschrieben sind. Sie sind durch Erhitzen von feuchttrockner Stärke, meist in Anwesenheit geringer Mengen Säure, erhältlich. Typische Röstdextrine sind z.B. im Handel erhältliche Weiß- und Gelbdextrine: ferner zählen dazu Dextrine, die unter dem Warenzeichen Noredux® und Tackidex® vertrieben werden. Der Begriff Dextrin wird hier ganz generell für Stärkeabbauprodukte verwendet. Mit ganz besonderem Vorteil wird jedoch die radikalische Emulsionspolymerisation in Gegenwart von verzuckerten Stärken empfohlen. Hierbei handelt es sich um ein durch Hydrolyse in wäßriger Phase erhältliches Stärkeabbauprodukt, das vorzugsweise ein gewichtsmittleres Molekulargewicht $M_w$ von 1000 bis 25000 aufweist. Detailliertere Angaben zur Herstellung der genannten Stärken und Stärkederivate findet man in G. Tegge, Stärke und Stärkederivate, Behr's Verlag, Hamburg 1984. Selbstverständlich können die genannten Stärken und Stärkederivate in z.B. durch Veretherung oder Veresterung chemisch modifizierter Form erfindungsgemäß angewendet werden.

Diese chemische Modifizierung kann bereits an der Ausgangsstärke vor deren Abbau oder danach durchgeführt werden. Veresterungen sind sowohl mit anorganischen als auch mit organischen Säuren, deren Anhydriden oder Chloriden möglich. Von besonderem Interesse sind phosphatierte und acetylierte Derivate. Die gängigste Methode zur Veretherung ist die Behandlung mit organischen Halogenverbindungen, Epoxiden oder Sulfaten in wäßriger alkalischer Lösung. Besonders geeignete Ether sind Alkylether, Hydroxyalkylether, Carboxyalkylether und Allylether. Ferner kommen cyanalkylierte Derivate sowie Umsetzungsprodukte mit 2,3-Epoxipropyltrimethylammoniumchlorid in Betracht. Chemisch nicht modifizierte Produkte sind bevorzugt. Selbstverständlich eignen sich auch Mono- und Oligosaccharide sowie Abbauprodukte der Cellulose, beispielsweise Cellobiose und ihre Oligomeren. Weiterhin eignen sich Alkylmono-, -di- und -polyglucoside.

Die erfindungsgemäß ganz besonders bevorzugt anzuwendenden verzuckerten Stärken eines gewichtsmittleren Molekulargewichtes von 1000 bis 25000 sind als solche im Handel erhältlich (z.B. die C* PUR Produkte 01906, 01908, 01910, 01912, 01915, 01921, 01924, 01932 oder 01934 der Cerestar Deutschland GmbH, D-4150 Krefeld 12). Derartige verzuckerte Stärken sind von den Röstdextrinen u.a. dadurch chemisch verschieden, daß bei einem hydrolytischen Abbau in wäßrigem Medium (üblicherweise Suspensionen oder Lösungen), der in der Regel bei Feststoffgehalten von 10 bis 30 Gew.% sowie vorzugsweise säure- oder enzymkatalysiert vorgenommen wird, die Möglichkeit der Rekombination und Verzweigung im wesentlichen nicht gegeben ist, was sich nicht zuletzt auch in anderen Molekulargewichtsverteilungen äußert. So haben sich verzuckerte Stärken, die eine bimodale Molekulargewichtsverteilung aufweisen, erfindungsgemäß als besonders vorteilhaft erwiesen. Die Herstellung verzuckerter Stärken ist allgemein bekannt und u.a. in G. Tegge, Stärke und Stärkederivate, Behr's Verlag, Hamburg 1984, S. 173 und S. 220ff sowie in der EP-A-441 197 beschrieben. Vorzugsweise handelt es sich bei den erfindungsgemäß zu verwendenden verzuckerten Stärken um solche, deren gewichtsmittleres Molekulargewicht $M_w$ im Bereich von 1000 bis 16000 liegt.

Die erfindungsgemäß zu verwendenden verzuckerten Stärken sind normalerweise bei Raumtemperatur in Wasser vollständig löslich, wobei die Löslichkeitsgrenze in der Regel oberhalb von 50 Gew.-% liegt, was sich für die Herstellung der erfindungsgemäßen wäßrigen Polymerisatdispersionen als besonders vorteilhaft erweist.

Es hat sich ferner als günstig erwiesen, wenn die erfindungsgemäß zu verwendenden verzuckerten Stärken eine Unheitlichkeit U (definiert als Verhältnis von gewichtsmittlerem Molekulargewicht $M_w$ zu zahlenmittlerem Molekulargewicht $M_n$; U charakterisiert die Molekulargewichtsverteilung) im Bereich von 6 bis 12 aufweisen.

Ferner ist es von Vorteil, wenn der Gewichtsanteil der erfindungsgemäß zu verwendenden verzuckerten Stärken, der ein Molekulargewicht unterhalb von 1000 aufweist, wenigstens 10 Gew.-%, jedoch nicht mehr als 70 Gew.-% beträgt.

Darüber hinaus ist es empfehlenswert, solche erfindungsgemäß zu verwendenden verzuckerten Stärken anzuwenden, deren Dextroseäquivalent DE 5 bis 40 beträgt. Der DE-Wert charakterisiert das Reduktionsvermögen bezogen auf das Reduktionsvermögen von wasserfreier Dextrose und wird nach DIN 10308 Ausgabe 5.71 des Normenausschusses Lebensmittel und landwirtschaftliche Produkte bestimmt (vgl. auch Günther Tegge, Stärke und Stärkederivate, Behr's Verlag, Hamburg 1984, S. 305).

Außerdem hat es sich gezeigt, daß in ihrem Eigenschaftsprofil besonders günstige wäßrige Polymerisatdispersionen dann erhalten werden, wenn man erfindungsgemäß zu verwendende verzuckerte Stärken einsetzt, deren 40 gew.-%igen wäßrigen Lösungen bei 25°C und einem Schergefälle von 75 s$^{-1}$ eine nach DIN 53 019 bestimmte dynamische Viskosität $\eta^{40}$ [Pa·s] von 0,005 bis 0,06, vorzugsweise von 0,007 bis 0,04 aufweisen.

An dieser Stelle sei festgehalten, daß in dieser Schrift, sofern nichts anderes erwähnt ist, Aussagen über das Molekulargewicht von erfindungsgemäß zu verwendenden Sacchariden und deren Derivaten auf Bestimmungen mittels der Gelpermeationschromatographie beruhen, wobei unter folgenden Bedingungen chromatographiert wurde:

| Säulen: | 3 Stück 7.5 x 600 mm Stahl gefüllt mit TSK-Gel G 2000 PW; G 3000 PW u. G 4000 PW. Porenw. 5 μm |
|---|---|
| Eluent: | Wasser dest. |
| Temp.: | RT (Raumtemperatur) |
| Detektion: | Differentialrefraktometer (z.B. ERC 7511) |
| Fluss: | 0.8 ml/min. Pumpe: (z.B. ERC 64.00) |
| Injectv.: | 20 μl Ventil: (z.B. VICI 6-Wege-Ventil) |
| Auswertung: | Bruker Chromstar GPC-Software |
| Eichung: | Die Eichung erfolgte im niedermolekularen Bereich mit Glucose, Raffinose, Maltose und Maltopentose. Für den höhermolekularen Bereich wurden Pullulan-Standards mit einer Polydispersität < 1.2 verwendet. |

Die erfindungsgemäß während der radikalischen wäßrigen Emulsionspolymerisation anwesenden Mono-, Oligo-, Polysaccharide und/oder deren Derivate können sowohl als einzige Dispergiermittel als auch im Gemisch mit anderen grenzflächenaktiven Substanzen anwesend sein. Werden sie als einzige Dispergiermittel eingesetzt, sind sie in den erfindungsgemäßen wäßrigen Polymerisatdispersionen normalerweise in Mengen von, bezogen auf die Menge an zu polymerisierenden Monomeren, 1 bis 50 Gew.-% enthalten. Bevorzugt wird ein Verhältnis von 100 Gew.-Teilen der ungesättigten Monomere zu 5 bis 40, insbesondere 10 bis 30 Gew.-Teilen der Saccharid-Komponente bei der wäßrigen Emulsionspolymerisation.

Als begleitende grenzflächenaktive Substanzen kommen prinzipiell die ansonsten als Dispergiermittel üblicherweise eingesetzten Schutzkolloide und Emulgatoren in Betracht. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als begleitende Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als begleitende grenzflächenaktive Substanzen verwendet. Gebräuchliche begleitende Emulgatoren sind z.B. ethoxylierte Fettalkohole (EO-Grad: 3 bis 50, Alkylrest: $C_8$ bis $C_{18}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208. Bevorzugt sind solche grenzflächenaktiven Substanzen, die sich biologisch abbauen lassen und die selbst oder deren Abbau- und Folgeprodukte nicht toxikologisch bedenklich sind. Begleitende grenzflächenaktive Substanzen werden in der Regel in Mengen von bis zu 5 Gew.-%, insbesondere von 0,1 bis 1 Gew.-%, bezogen auf die Menge der zu polymerisierenden Monomeren, mitverwendet.

Die Emulsionspolymerisationstemperatur beträgt in der Regel 30 bis 95, vorzugsweise 75 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. In anwendungstechnisch vorteilhafter Weise enthält die Vorlage und/oder der Monomerenzulauf geringe Mengen an Emulgatoren, bezogen auf die Gesamtmenge der zu polymerisierenden Monomeren in der Regel weniger als 0,5 Gew.-%, um die Oberflächenspannung des Dispergiermediums zu reduzieren und so das Einrühren zu erleichtern. Häufig werden die Monomeren daher in mit diesen Hilfsemulgatoren voremulgierter Weise der Polymerisationszone zugeführt. Mit Vorteil ist die Gesamtmenge des zu verwendenden Mono-, Oligo-, Polysaccharids und/oder deren Derivate in einer wäßrigen Vorlage enthalten.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetall- und Ammoniumperoxidisulfate oder $H_2O_2$, als auch um Azoverbindungen handeln.

Geeignet sind auch kombinierte Systeme, die aus wenigstens einem organischen Reduktionsmittel und wenistens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetabisulfit und anstelle von Wasserstoffperoxid tert.-Butylhydroperoxid oder Alkalimetallperoxidisulfate und/oder Ammoniumperoxidisulfate angewendet werden. Bei den kombinierten Systemen ist es ferner zweckmäßig, die verzuckerten Stärken als reduzierende Komponente zu verwenden. In der Regel beträgt die Menge der eingesetzten radikalischen Initiatorsysteme, bezogen auf die Gesamtmenge der zu polymerisierenden Monomeren 0,1 bis 2 Gew.-%. Besonders bevorzugt werden Ammonium- und/oder Alkalimetallperoxidisulfate für sich oder als Bestandteil kombinierter Systeme als Initiatoren eingesetzt.

Die Art und Weise, in der das radikalische Initiatorsystem im Verlauf der erfindungsgemäßen radikalischen wäßrigen Emulsionspolymerisation dem Polymerisationsgefäß zugegeben wird, ist eher von untergeordneter Bedeutung. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Selbstverständlich kann die erfindungsgemäße radikalische wäßrige Emulsionspolymerisation auch unter erhöhtem oder reduziertem Druck erfolgen.

Die erfindungsgemäß verwendeten wäßrigen Polymerisatdispersionen werden in der Regel mit Gesamtfeststoffgehalten von 15 bis 70 Gew.-% hergestellt, wobei diejenigen anwendungstechnisch besonders bevorzugt sind, die 1 bis 50, ganz besonders bevorzugt 5 bis 40, insbesondere 10 bis 30 Gew.-%, bezogen auf die zu polymerisierenden Monomeren, erfindungsgemäß zu verwendende Mono-, Oligo-, Polysaccharide und/oder deren Derivate enthalten.

Als Textilhilfsmittel zur pflegeleichten Ausrüstung von Textilien eignen sich in ganz besonders vorteilhafter Weise wäßrige Polymerisatdispersionen, deren Polymerisate durch radikalische Polymerisation von Monomerengemischen erhältlich sind, die nachfolgende Monomerenzusammensetzung, bestehend aus

| 39 bis 90 Gew.-% | wenigstens eines Esters aus 3 bis 6 C-Atome aufweisenden $\alpha,\beta$-monoethylenisch ungesättigten Mono- und Dicarbonsäuren und 1 bis 6 C-Atome aufweisenden Alkanolen (Monomere a), |
|---|---|
| 1 bis 10 Gew.-% | wenigstens eines Monomeren aus der Gruppe umfassend 3 bis 6 C-Atome aufweisende $\alpha,\beta$-monoethylenisch ungesättigte Carbonsäuren, deren Amide und Nitrile (Monomere b) und |
| 0 bis 10 Gew.-% | eines oder mehrerer Monomeren aus der Gruppe umfassend N-Alkylolamide von 3 bis 6 C Atome umfassenden $\alpha,\beta$-monoethylenisch ungesättigte Carbonsäuren mit 1 bis 4 C-Atomen in der Alkylgruppe und bis zu 25 C-Atome enthaltende zwei nicht konjugierte ethylenisch umgesättigte Doppelbindungen aufweisende Monomere (Monomere c), |

aufweisen und die, bezogen auf die zu polymerisierenden Monomeren 1 bis 50, vorzugsweise 5 bis 40, insbesondere 10 bis 30 Gew.-% Mono-, Oligo-, Polysaccharide und/oder deren Derivate enthalten. Selbstverständlich können die Monomeren durch andere in dieser Schrift genannte vernetzend wirkende Monomere ganz oder teilweise ersetzt werden.

Mit besonderem Vorteil werden wäßrige Polymerisatdispersionen empfohlen, die durch radikalische wäßrige Emulsionspolymerisation von Gemischen aus Monomeren a, b und c erhältlich sind, deren Monomerenzusammensetzung so gewählt ist, daß ein nur aus den Monomeren a und b aufgebautes Polymerisat eine Glasübergangstemperatur im Bereich von -70 bis +40°C aufweisen würde.

Die Glasübergangstemperatur ist in bekannter Weise nach ASTM 3418/82 (sog. "midpoint-Temperatur") meßbar. Eine Berechnung der Glasübergangstemperatur ist aus den Gewichtsanteilen der am Aufbau eines Polymeren beteiligten ethylenisch ungesättigten Monomeren nach der Beziehung von Fox möglich. Nach Fox (T.G. Fox, Bull. Am. Phys. Soc. (Ser. II) 1, 123 [1956]) gilt für die Glasübergangstemperatur von Mischpolymerisaten in guter Näherung:

$$\frac{1}{Tg} = \frac{X^1}{Tg^1} + \frac{X^2}{Tg^2} + \dots \frac{X^s}{Tg^s}$$

wobei $X^1$, $X^2$, ..., $X^s$ die Massenbrüche der Monomeren 1, 2, ..., s und $Tg^1$, $Tg^2$ ..., $Tg^s$ die Glasübergangstemperaturen der jeweils nur aus einem der Monomeren 1, 2, ..., s aufgebauten Polymeren in Grad Kelvin bedeuten. Die Glasübergangstemperaturen der Monomeren a, b und c sind im wesentlichen bekannt und z.B. in J. Brandrup, E.H. Immergut, Polymer Handbook 1st Ed. J. Wiley, New York 1966 und 2nd Ed. J. Wiley, New York 1975, aufgeführt.

Mit den erfindungsgemäß zu verwendenden Polymerisatdispersionen können im Prinzip alle üblichen Textilmaterialien behandelt werden.

Die vorliegende Erfindung betrifft auch ein Verfahren zur pflegeleichten Ausrüstung von Textilien durch Imprägnieren des Textilgutes mit einem wäßrigen Bad, das mindestens eine der beschriebenen wäßrigen Polymerisatdispersionen enthält, bei üblicherweise 10 bis 35°C und anschließendes Trocknen des imprägnierten Textilgutes bei einer Temperatur von 80 bis 200°C, vorzugsweise 100 bis 160°C.

Besonders gut eignen sich die beschriebenen Polymerisatdispersionen als Textilhilfsmittel zur Pflegeleicht- und Knitterfestausrüstung von cellulosehaltigen textilen Materialien, insbesondere von Baumwollgeweben oder baumwollhaltigen Geweben, z.B. Baumwoll-Polyester. Hierbei enthält das verwendete wäßrige Imprägnierbad in der Regel neben den Polymerisatdispersionen einen reaktiven niedermolekularen N-Alkyl, N-Methylol- und/oder N-Methylolethergruppen enthaltenden Vernetzer und einen Vernetzungskatalysator. Das imprägnierte Textilgut wird dann bei einer Temperatur von 80 bis 200°C getrocknet und fixiert.

Für die Pflegeleicht- und Knitterfestausrüstung sind die gebräuchlichsten Vernetzer N-Methylol- bzw. N-Methylolethergruppen enthaltende Verbindungen. Sie sind Umsetzungsprodukte aus Formaldehyd und vorzugsweise Harnstoff, Glyoxalmonourein, Melamin und Acetylendiharnstoff. Diese Vernetzer spalten auf der ausgerüsteten Ware geringe Mengen freien Formaldehyd ab.

Zukunftsorientierend ist daher vor allem auch die Verwendung der beschriebenen Polymerisatdispersionen mit formaldehydfreien Vernetzern, die aus Dialkylharnstoffen und Glyoxal, vorzugsweise aus Dimethylharnstoff und Glyoxal (Dimethyldihydroxyethylenharnstoff) hergestellt werden. Da ein formaldehydfreier Vernetzer in der Wirksamkeit einem formaldehydhaltigen Vernetzer geringfügig unterlegen ist, wirkt sich die Mitverwendung der beschriebenen Polymerisatdispersionen deutlich verbessernd auf das pflegeleichte Ausrüstungsniveau der ausgerüsteten Ware aus.

Bei den Vernetzungskatalysatoren handelt es sich vorzugsweise um latent saure Salze, vielfach abgemischt mit geringen Mengen von organischen Säuren wie Zitronen-, Adipin-, Glykol- oder Weinsäure. Bei den Salzen handelt es sich insbesondere um Magnesium-, Zink-, Natrium- und Ammoniumsalze von anorganischen Säuren wie Salz-, Salpeter-, Fluß-, Phosphor- und Schwefelsäure. Als Natriumsalz wird vorzugsweise auch Natriumtetrafluoroborat verwendet.

Die Einsatzmengen der beschriebenen Polymerisatdispersionen im Imprägnierbad liegen, je nach gewünschtem Ausrüstungseffekt, zwischen 0,5 und 30 Gew.-%, bezogen auf den Gesamtfeststoffgehalt der Polymerisatdispersionen. Bei Ausrüstungen mit weichem Warengriff werden 0,5 - 16 Gew.-%, vorzugsweise 1 - 10 Gew.-% eingesetzt, bei Steifausrüstung zwischen 8 und 30 Gew.-%, vorzugsweise 10 - 20 Gew.-%.

Übliche Verfahrensweisen für die Pflegeleicht- und Knitterfestausrüstung bezüglich Imprägnieren und Fixieren sowie übliche Mengen für die eingesetzten Vernetzer und Vernetzungskatalysatoren sind dem Fachmann bekannt und brauchen hier deshalb nicht weiter ausgeführt zu werden.

Zum Einsatz für die pflegeleichte Ausrüstung von Textilien im Sinne der vorliegenden Erfindung eignen sich Textilhilfsmittel Formulierungen, welche die beschriebenen wäßrigen Polymerisatdispersionen mit einem Polymerisat-Feststoffgehalt von 0,5 bis 70 Gew.-% enthalten.

Durch das Einpolymerisieren der Saccharid-Komponente als Schutzkolloid für die beschriebenen Polymerisate in der Dispersion erzielt man eine außerordentlich gute Scherstabilität auf den Foulardwalzen. Mit den Ausrüstungsflotten, die diese Polymerisatdispersionen enthalten, sind sehr hohe Produktionsgeschwindigkeiten möglich ohne die Gefahr der Belagsbildung auf den Walzen oder Fleckenbildung auf der Ware.

Ein weiterer anwendungstechnischer Vorteil der beschriebenen filmbildenden Polymerisatdispersionen ist ihre sehr gute Elektrolytverträglichkeit im Textilbehandlungs- bzw. ausrüstungsbad. Sie können problemlos mit allen kationisch wirkenden Hilfsmitteln angewendet werden.

Es ist bekannt, daß die zur Herstellung von Polymerisatdispersionen verwendeten Dispergiermittel in der Regel die Reibechtheiten von gefärbtem ausgerüstetem Textilgut verschlechtern. Je höher die Dispergiermittelkonzentration in einer Polymerisatdispersion ist, desto höher ist die Gefahr der Verschlechterung der Reibechtheiten. Die beschriebenen Polymerisatdispersionen enthalten üblicherweise nur geringfügige Mengen an begleitenden Dispergiermitteln. Dadurch ist die Gefahr einer Reibechtheiten-Verschlechterung bei gefärbtem Textilgut auf ein Minimum beschränkt.

Aufgrund der Verwendung von bekanntermaßen biologisch gut abbaubaren Sacchariden bei der Herstellung der beschriebenen Polymerisatdispersionen zeigt das hiermit behandelte Textilgut eine verbesserte Kompostierbarkeit.

Ein einfaches Zumischen von Sacchariden zu den bekannten Polymerisatdispersionen ohne Saccharid-Komponenten oder in die Imprägnierbäder bewirkt nicht die anwendungstechnischen Vorteile, die die beschriebenen Polymerisatdispersionen aufweisen.

Weiterhin wurde überraschend festgestellt, daß die Polymerisatdispersionen in Verbindung mit reaktiven Vernetzern deutlich die pflegeleichten (bügelfreien) Eigenschaften der ausgerüsteten Ware verbessern; sie wirken vor allem der Knitterneigung der ausgerüsteten Ware entgegen. Das Knittern von Textilien wird über die Messung der Erholung von Knitterfalten (Messung von Knitterwinkeln) in einer festgelegten Zeit geprüft.

Bei der mit den beschriebenen Polymerisatdispersionen und Vernetzern ausgerüsteten Ware erzielt man Knitterwinkel, die bis zu 20 % höher liegen als diejenigen, die mit den Polymerisatdispersionen des Standes der Technik und den bekannten Vernetzern erreicht werden.

Bekanntermaßen hängen bei der pflegeleichten Ausrüstung mit Reaktanten (Vernetzern) die Reißfestigkeitsverluste der ausgerüsteten Ware von dem Vernetzungsgrad der Ware ab, der in der Höhe der Knitterwinkel indirekt meßbar ist. D.h., je höher die pflegeleichten Eigenschaften sind, desto höher ist der Knitterwinkel und desto stärker ist der Reißfestigkeitsverlust. Bei der Verwendung der beschriebenen Polymerisatdispersionen mit solchen Vernetzern werden die Reißfestigkeiten trotz der deutlichen Verbesserung der Knitterwinkel nicht verschlechtert.

Weiterhin mindert die erfindungsgemäße Verwendung der beschriebenen Polymerisatdispersionen bei Textilien aus Cellulose (Viskose, Baumwolle, Polynosic®) die Reib- und Scheuerfestigkeitsverluste, die durch pflegeleichte Veredlung mit reaktiven Vernetzern zwangsläufig entstehen.

Durch eingebaute "reaktive" Gruppen können die beschriebenen Polymerisatdispersionen mit Vernetzern reagieren und somit die Waschbeständigkeit der Imprägnierung auf der Ware verbessern.

Bei Synthesefasern enthaltenden Textilien (Polyester-, Polyacrylnitril-, Polyamidfasern) oder deren Mischungen mit Cellulosefasern wirken sie der Bildung von Faserknüllchen beim Tragen (Pilling) entgegen.

Sie können auch als griffgebende Komponente dem Imprägnierbad zugesetzt werden. Je nach Härte des filmbildenden Polymerisates können Warengriffe von weich bis sehr steif erzielt werden.

Die beschriebenen Polymerisatdispersionen können auch als Binder für Pigmente bzw. Pigmentfarbstoffe beim einbadigen Färben und pflegeleichten Veredeln von Textilien eingesetzt werden.

Herstellung von wäßrigen Polymerisatdispersionen

Die Gesamtfeststoffgehalte wurden nach DIN 53 189 bestimmt.

Dispersion A (zum Vergleich)

Gemäß (1) wurde eine handelsübliche 45 gew.-%ige wäßrige Dispersion eines Mischpolymerisates aus Acrylsäure-n-butylester, Butandiol-diacrylat, N-Methylol-methacrylamid und Acrylamid hergestellt, welches keine Stärke enthielt.

Dispersion B (zum Vergleich)

Gemäß (2) wurde eine handelsübliche 50 gew.-%ige wäßrige Dispersion eines Mischpolymerisates aus Acrylsäureethylester, Methacrylsäuremethylester, N-Methylol-methacrylamid und Acrylsäure hergestellt, welches keine Stärke enthielt.

Dispersion C

Ein Gemisch aus 163 g Wasser und 20 g Stärke Cerestar C*PUR 01915 wurde auf 80°C erhitzt und 20 % vom Zulauf 2 sowie 10 % vom Zulauf 1 wurden zugegeben. Es wurde 15 min bei 80°C anpolymerisiert und anschließend mit der Dosierung der Restmengen der Zuläufe 1 und 2 begonnen. Die Zugabe erfolgte kontinuierlich über 2,5 h (Zulauf 1) und 3 h (Zulauf 2). Danach wurde 1 h bei 80°C nachpolymerisiert, abgekühlt und bei einer Innentemperatur < 30°C wurden 1,1 g Wasserstoffperoxid (30 gew.-%ig in Wasser) zugesetzt. 5 min später wurde eine Mischung aus 0,4 g Ascorbinsäure, 0,01 g Ammoniumeisen-II-sulfat und 5 g Wasser über 15 min zugegeben und 30 min nachgerührt. Gesamtfeststoffgehalt der wäßrigen Polymerisatdispersion: ca. 50 Gew.-%.

| Zulauf 1: | 156 g | Wasser |
|---|---|---|
| | 392 g | n-Butylacrylat |
| | 8 g | Acrylsäure |
| | 0,9 g | eines handelsüblichen Emulgators auf der Basis einer Alkyldiphenyloxidsulfonsäure (Dowfax® 2A1 der Fa. Dow) (45 gew.-%ig in Wasser) |

| Zulauf 2: | 2,4 g | Natriumperoxidisulfat |
|---|---|---|
| | 98 g | Wasser |

Dispersion D

Ein Gemisch aus 178 g Wasser und 40 g Stärke Cerestar C*PUR 01915 wurde auf 60°C erhitzt, 20 % vom Zulauf 2 wurden zugegeben und bei 80°C 10 % vom Zulauf 1. Es wurde 15 min bei 80°C anpolymerisiert und anschließend mit der Dosierung der Restmengen der Zuläufe 1 und 2 begonnen. Die Zugabe erfolgte kontinuierlich über 2,5 h (Zulauf 1) und 3 h (Zulauf 2). Danach wurde 1 h bei 80°C nachpolymerisiert, abgekühlt und bei einer Innentemperatur < 30°C wurden 1,1 g Wasserstoffperoxid (30 gew.-%ig in Wasser) zugesetzt. 5 min später wurde eine Mischung aus 0,4 g Ascorbinsäure, 0,01 g Ammoniumeisen-II-sulfat und 8 g Wasser über 15 min zugegeben und 30 min nachgerührt. Gesamtfeststoffgehalt der wäßrigen Polymerisatdispersion: ca. 49 Gew.-%.

| Zulauf 1: | 156 g | Wasser |
|---|---|---|
| | 392 g | n-Butylacrylat |
| | 8 g | Acrylsäure |
| | 0,9 g | Dowfax® 2A1 (45 gew.-%ig in Wasser) |

| Zulauf 2: | 2,4 g | Natriumperoxidisulfat |
|---|---|---|
| | 98 g | Wasser |

Dispersion E

Ein Gemisch aus 203 g Wasser und 60 g Stärke Cerestar C*PUR 01915 wurde auf 80°C erhitzt und 20 % vom Zulauf 2 sowie 10 % vom Zulauf 1 wurden zugegeben. Es wurde 15 min bei 80°C anpolymerisiert und anschließend mit der Dosierung der Restmengen der Zuläufe 1 und 2 begonnen. Die Zugabe erfolgte kontinuierlich über 2,5 h (Zulauf 1) und 3 h (Zulauf 2). Danach wurde 1 h bei 80°C nachpolymerisiert, abgekühlt und bei einer Innentemperatur < 30°C wurden 1,1 g Wasserstoffperoxid (30 gew.-%ig in Wasser) zugesetzt. 5 min später wurde eine Mischung aus 0,4 g Ascorbinsäure, 0,01 g Ammoniumeisen-II-sulfat und 5 g Wasser über 15 min zugegeben und 30 min nachgerührt. Gesamtstoffgehalt der wäßrigen Polymerisatdispersion: ca. 50 Gew.-%

| Zulauf 1: | 156 g | Wasser |
|---|---|---|
| | 392 g | n-Butylacrylat |
| | 8 g | Acrylsäure |
| | 0,9 g | Dowfax® 2A1 (45 gew.-%ig in Wasser) |

| Zulauf 2: | 2,4 g | Natriumperoxidisulfat |
|---|---|---|
| | 98 g | Wasser |

Dispersion F

Ein Gemisch aus 223 g Wasser und 80 g Stärke Cerestar C*PUR 01915 wurde auf 80°C erhitzt und 20 % vom Zulauf 2 sowie 10 % vom Zulauf 1 wurden zugegeben. Es wurde 15 min bei 80°C anpolymerisiert und anschließend mit der Dosierung der Restmengen der Zuläufe 1 und 2 begonnen. Die Zugabe erfolgte kontinuierlich über 2,5 h (Zulauf 1) und 3 h (Zulauf 2). Danach wurde 1 h bei 80°C nachpolymerisiert, abgekühlt und bei einer Innentemperatur < 30°C wurden 1,1 g Wasserstoffperoxid (30 gew.-%ig in Wasser) zugesetzt. 5 min später wurde eine Mischung aus 0,4 g Ascorbinsäure, 0,01 g Ammoniumeisen-II-sulfat und 5 g Wasser über 15 min zugegeben und 30 min nachgerührt.

Gesamtstoffgehalt der wäßrigen Polymerisatdispersion: ca. 50 Gew.-%.

| Zulauf 1: | 156 g | Wasser |
|---|---|---|
| | 392 g | n-Butylacrylat |
| | 8 g | Acrylsäure |
| | 0,9 g | Dowfax® 2A1 (45 gew.-%ig in Wasser) |

| Zulauf 2: | 2,4 g | Natriumperoxidisulfat |
|---|---|---|
| | 98 g | Wasser |

Dispersion G

Ein Gemisch aus 189 g Wasser und 40 g Stärke Cerestar C*PUR 01915 wurde auf 80°C erhitzt und 20 % vom Zulauf 2 sowie 10 % vom Zulauf 1 wurden zugegeben. Es wurde 15 min bei 80°C anpolymerisiert und anschließend mit der Dosierung der Restmengen der Zuläufe 1 und 2 begonnen. Die Zugabe erfolgte kontinuierlich über 2,5 h (Zulauf 1) und 3 h (Zulauf 2). Danach wurde 1 h bei 80°C nachpolymerisiert, abgekühlt und bei einer Innentemperatur < 30°C wurden 1,1 g Wasserstoffperoxid (30 gew.-%ig in Wasser) zugesetzt. 5 min später wurde eine Mischung auf 0,4 g Ascorbinsäure, 0,01 g Ammoniumeisen-II-sulfat und 5 g Wasser über 15 min zugegeben und 30 min nachgerührt.

Gesamtstoffgehalt der wäßrigen Polymerisatdispersion: ca. 49 Gew.-%

| Zulauf 1: | 156 g | Wasser |
|---|---|---|
| | 160 g | n-Butylacrylat |
| | 228 g | Methylmethacrylat |
| | 12 g | Acrylamidoglykolsäure |
| | 1,8 g | Dowfax® 2A1 (45 gew.-%ig in Wasser) |

| Zulauf 2: | 2,4 g | Natriumperoxidisulfat |
|---|---|---|
| | 98 g | Wasser |

Anwendungsbeispiele 1 - 16

Ein Baumwoll-Gewebe mit einem Flächengewicht von ca. 110 g/m$^2$ wurde jeweils mit den in der Tabelle 1 bzw. 2 angegebenen wäßrigen Ausrüstungsflotten auf einem Foulard imprägniert, auf ca. 75 Gew.-% Restfeuchte abgequetscht, bei 100°C getrocknet und bei 150°C 4 min fixiert (kondensiert).

Der Grad der pflegeleichten Ausrüstung wurde anhand folgender Kenndaten dargestellt:

- Trockenknitterwinkel (Summe aus Kette und Schuß nach DIN 53890)

- Reißfestigkeit (Schuß) gemessen nach ASTM D 1682-84-175

- Monsanto-Bild nach einmaliger 20minütiger Wäsche bei 60°C

Zur Prüfung der Scherstabilität bzw. der Belagsbildung auf den Foulardwalzen wurde eine Flotte eingesetzt, die üblicherweise für die Ausrüstung verwendet wird. Der Flotte wurde 0,1 Gew.-% des blauen Pigments C.I. 74160 beigemischt, um den Walzenbelag visuell besser zu erkennen.

Die zu prüfende Ausrüstungsflotte wurde zuerst bei ca. 1000 U/min mit einem handelsüblichen Mixer 10 min geschert und danach die Belagsbildung auf den Foulardwalzen wie folgt geprüft:

Das mit dem Mixer behandelte Imprägnierbad wurde in das Chassis eines Foulards gegeben. Der Foulard hatte zwei horizontal gelagerte Walzen von 9 cm Durchmesser und 15 cm Länge. Der Antrieb erfolgte elektrisch über ein stufenlos regelbares Getriebe. Der Walzendruck erfolgte über einen Hebelarm vom 35 cm Länge; am Ende des Hebelarms hingen etwa 12 kg Bleigewicht. Die Härte der Foulardwalzen betrug 72° Shore (Antriebswalze) und 84° Shore Härte (Druckwalze).

Ein endloses Baumwollgewebe von 6 cm Breite und 56 cm Länge wurde durch das Ausrüstungsbad (Flotte) und von unten in das Quetschwerk 30 min mit etwa 12 m/min laufen gelassen.

Der durch das blaue Pigment angefärbte Belag auf den Foulardwalzen wurde anhand einer Skala von 0 - 5 beurteilt, wobei z.B. 0 = sehr starker Walzenbelag, 3 = mittelstarker und 5 = kein Walzenbelag bedeutet.

Die Ergebnisse der Tests sind in Tabelle 1 und 2 dargestellt.

Tabelle 1

Ausrüstung mit ca. 45 gew.-%iger wäßriger Dimethyloldihydroxyethylenharnstoff(DMDHEH)-Lösung als Vernetzer und Magnesiumchlorid als Vernetzungskatalysator

| | Beispiel | | | | | | | |
|---|---|---|---|---|---|---|---|---|
| | 1* | 2* | 3* | 4 | 5 | 6 | 7 | 8* |
| DMDHEH-Lösung | 100 | 100 | 100 | 100 | 100 | 100 | 100 | – |
| MgCl$_2$·6H$_2$O | 12 | 12 | 12 | 12 | 12 | 12 | 12 | – |
| Stärke (Cerestar C*PUR 01915) | – | – | 4 | – | – | – | – | – |
| Dispersion A | – | 40 | 36 | – | – | – | – | – |
| Dispersion C | – | – | – | 40 | – | – | – | – |
| Dispersion D | – | – | – | – | 40 | – | – | – |
| Dispersion E | – | – | – | – | – | 40 | – | – |
| Dispersion F | – | – | – | – | – | – | 40 | – |
| Trockenknitterwinkel [°] | 191 | 215 | 190 | 215 | 220 | 231 | 244 | 91 |
| Trockenknitterwinkel [°] nach Maschinenwäsche (60°C) | 189 | 210 | 188 | 213 | 218 | 230 | 242 | 95 |
| Reißfestigkeit [N] | 289 | 295 | 285 | 295 | 310 | 305 | 295 | 410 |
| Monsanto-Bild [Note] | 3,6 | 3,8 | 3,8 | 3,8 | 4,0 | 4,0 | 4,2 | 1,0 |
| Walzenbelag [Note] | 5,0 | 0 | 0 | 2,5 | 3,0 | 4,0 | 5,0 | – |

Die angegebenen Mengen sind Gew.-Teile; (*) zum Vergleich

EP 0 663 969 B1

Tabelle 2

Ausrüstung mit ca. 45 gew.-%iger wäßriger Dimethyl-4,5-dihydroxyethylenharnstoff(Dimethyl-DHEH)-Lösung als Vernetzer und Magnesiumchlorid als Vernetzungskatalysator

| | Beispiel | | | | | | | |
|---|---|---|---|---|---|---|---|---|
| | 9* | 10* | 11* | 12 | 13 | 14 | 15 | 16* |
| Dimethyl-DHEH-Lösung | 100 | 100 | 100 | 100 | 100 | 100 | 100 | – |
| $MgCl_2 \cdot 6H_2O$ | 10 | 10 | 10 | 10 | 10 | 10 | 10 | – |
| Stärke (Cerestar C*PUR 01915) | – | – | 4 | – | – | – | – | – |
| Dispersion A | – | 40 | 36 | – | – | – | – | – |
| Dispersion C | – | – | – | 40 | – | – | – | – |
| Dispersion D | – | – | – | – | 40 | – | – | – |
| Dispersion E | – | – | – | – | – | 40 | – | – |
| Dispersion F | – | – | – | – | – | – | 40 | – |
| Trockenknitterwinkel [°] | 165 | 195 | 163 | 210 | 221 | 230 | 235 | 91 |
| Trockenknitterwinkel [°] nach Maschinenwäsche (60°C) | 162 | 185 | 162 | 205 | 210 | 222 | 230 | 95 |
| Reißfestigkeit [N] | 340 | 325 | 335 | 320 | 340 | 335 | 335 | 410 |
| Monsanto-Bild [Note] | 2,8 | 3,0 | 2,8 | 3,1 | 3,3 | 3,5 | 3,5 | 1,0 |
| Walzenbelag [Note] | 5,0 | 0 | 0 | 2,5 | 3,0 | 4,0 | 5,0 | – |

Die angegebenen Mengen sind Gew.-Teile; (*) zum Vergleich

Anwendungsbeispiele 17 und 18

Ein Krageneinlagestoff aus reiner Baumwolle mit einem Flächengewicht von ca. 150 g/m$^2$ wurde mit den in Tabelle 3 angegebenen wäßrigen Flotten auf einem Foulard imprägniert, auf ca. 85 Gew.-% Restfeuchte abgequetscht, bei 100°C getrocknet und bei 150°C fixiert.

Tabelle 3

| Ausrüstung mit ca. 45 gew.-%iger DMDHEH-Lösung als Vernetzer und Magnesiumchlorid als Vernetzungskatalysator | | |
|---|---|---|
| | Beispiel 17 (erfindungsgemäß) | Beispiel 18 (zum Vergleich) |
| DMDHEH-Lösung | 100 | 100 |
| MgCl$_2$·6H$_2$O | 12 | 12 |
| Dispersion G | 150 | -- |
| Dispersion B | -- | 150 |

Die angegebenen Mengen sind Gew.-Teile.

Die nach Beispiel 17 und 18 ausgerüsteten Krageneinlagestoffe fühlten sich beide steif und elastisch an. Ein derartiger Warengriff ist für Krageneinlagestoffe erforderlich. Die beiden verwendeten Imprägnierflotten unterschieden sich jedoch in den Laufeigenschaften bzw. in der Neigung zur Belagsbildung auf den Foulardwalzen. Die die Dispersion B enthaltende Ausrüstungsflotte bildete einen sehr starken Walzenbelag, die die Dispersion G enthaltende Flotte dagegen keinen.

**Patentansprüche**

1. Verwendung von wäßrigen Polymerisatdispersionen, die dadurch erhältlich sind, daß man radikalisch polymerisierbare ungesättigte Monomere in wäßriger Phase in Anwesenheit eines Saccharids oder Mischungen von Sacchariden nach dem Verfahren der radikalischen wäßrigen Emulsionspolymerisation polymerisiert, als Textilhilfsmittel zur pflegeleichten Ausrüstung von Textilien.

2. Verwendung von Polymerisatdispersionen nach Anspruch 1, die dadurch erhältlich sind, daß man radikalisch polymerisierbare ungesättigte Monomere in wäßriger Phase in Anwesenheit eines Oligosaccharids oder Polysaccharids, oxidativ, hydrolytisch und/oder enzymatisch abgebauten Polysacchariden, chemisch modifizierten Mono-, Oligo- oder Polysacchariden oder Mischungen der genannten Verbindungen mit einem Molekulargewicht bis 25.000 nach dem Verfahren der radikalischen wäßrigen Emulsionspolymerisation polymerisiert.

3. Verwendung von Polymerisatdispersionen nach Anspruch 1, die dadurch erhältlich sind, daß man 100 Gew.-Teile der ungesättigten Monomere in wäßriger Phase in Anwesenheit von 1 bis 50 Gew.-Teilen der Saccharidkomponente nach dem Verfahren der radikalischen wäßrigen Emulsionspolymerisation polymerisiert.

4. Verwendung von wäßrigen Polymerisatdispersionen gemäß den Ansprüchen 1 bis 3 als Textilhilfsmittel zur Pflegeleicht- und Knitterfestausrüstung von cellulosehaltigen textilen Materialien.

5. Verfahren zur pflegeleichten Ausrüstung von Textilien, dadurch gekennzeichnet, daß man das Textilgut mit einem wäßrigen Bad imprägniert, das mindestens eine wäßrige Polymerisatdispersion gemäß den Ansprüchen 1 bis 3 enthält, und das imprägnierte Textilgut bei einer Temperatur von 80 bis 200°C trocknet.

**Claims**

1. The use of aqueous polymer dispersions obtainable by polymerizing free-radically polymerizable unsaturated monomers in aqueous phase in the presence of a saccharide or of mixtures of saccharides by the method of free-radical aqueous emulsion polymerization as textile auxiliaries for the easy-care finishing of textiles.

2. A use as claimed in claim 1 of polymer dispersions obtainable by polymerizing free-radically polymerizable unsaturated monomers in aqueous phase in the presence of an oligosaccharide or polysaccharide, oxidatively, hydrolytically and/or enzymatically degraded polysaccharides, chemically modified mono-, oligo- or polysaccharides or mixtures of the stated compounds having a molecular weight of up to 25,000 by the method of free-radical aqueous emulsion polymerization.

3. A use as claimed in claim 1 of polymer dispersions obtainable by polymerizing 100 parts by weight of the unsaturated monomers in aqueous phase in the presence of from 1 to 50 parts by weight of the saccharide component by the method of free-radical aqueous emulsion polymerization.

4. The use of aqueous polymer dispersions as set forth in any of claims 1 to 3 as textile auxiliaries for the easy-care and crease-resist finishing of cellulosic textile materials.

5. A method for the easy-care finishing of textiles, which comprises impregnating the textile material with an aqueous bath which comprises at least one aqueous polymer dispersion as set forth in any of claims 1 to 3 and drying the impregnated textile material at from 80 to 200°C.


**Revendications**

1. Utilisation de dispersions aqueuses de polymères, qui ont été obtenues en polymérisant des monomères insaturés susceptibles de polymérisation radicalaire, en phase aqueuse et en présence d'un saccharide ou de mélanges de saccharides, suivant le procédé de la polymérisation radicalaire en émulsion aqueuse, comme adjuvant pour l'apprêtage à minimum de soin de textiles.

2. Utilisation selon la revendication 1 de dispersions de polymères qui ont été obtenues en polymérisant, suivant le procédé de la polymérisation radicalaire en émulsion aqueuse, des monomères insaturés susceptibles de polymérisation radicalaire, en phase aqueuse et en présence d'un oligosaccharide ou d'un polysaccharide, de polysaccharides dégradés par oxydation, par hydrolyse ou par voie enzymatique, de mono-, oligo- ou polysaccharides modifiés chimiquement ou de mélanges desdits composés ayant un poids moléculaire de 25 000 au maximum.

3. Utilisation selon la revendication 1 de dispersions de polymères qui ont été obtenues en polymérisant, suivant le procédé de la polymérisation radicalaire en émulsion aqueuse, 100 parties en poids des monomères insaturés, en phase aqueuse et en présence de 1 à 50 parties en poids du composant saccharide.

4. Utilisation de dispersions aqueuses de polymères selon l'une quelconque des revendications 1 à 3 comme adjuvant pour l'apprêtage à minimum de soin et infroissable de matières textiles cellulosiques.

5. Procédé d'apprêtage à minimum de soin de textiles, caractérisé en ce que l'on imprègne l'article textile avec un bain aqueux qui contient au moins une dispersion aqueuse de polymère selon l'une quelconque des revendications 1 à 3 et on sèche l'article textile imprégné à une température de 80 à 200°C.